# EUROPEAN PATENT SPECIFICATION

(11) **EP 0 824 451 B1**
(45) Date of publication and mention of the grant of the patent: **02.01.2002**
(21) Application number: 97904064.9
(22) Date of filing: 30.01.1997
(51) Int. Cl.: B64G 1/50, F42B 15/34

(54) **CARBON FIBER FLOCKING FOR THERMAL MANAGEMENT OF COMPACT MISSILE ELECTRONICS**
BEFLOCKEN VON KOHLENSTOFFFASERN FÜR THERMISCHE VERWALTUNG VON KOMPAKTEN ELEKTRONISCHEN TEILEN EINER RAKETE
FLOCAGE DE FIBRE DE CARBONE POUR LA PROTECTION THERMIQUE DES PARTIES ELECTRONIQUES DE MISSILES COMPACTS

(30) Priority: 30.01.1996 US 10843 P; 27.01.1997 US 789111
(43) Date of publication of application: 25.02.1998
(73) Proprietor: RAYTHEON COMPANY, Lexington, Massachusetts 02173 (US)
(72) Inventor: BERENS, Thomas, J., Tucson, AZ 85743 (US); CAMPBELL, David, W., Tucson, AZ 85705 (US); DRAKE, Peter, J., Tucson, AZ 85747 (US); KNOWLES, Timothy, R., San Diego, CA 92121 (US); MELLOR, Timothy, B., Tucson, AZ 85719 (US)
(74) Representative: Gahlert, Stefan, Dr.-Ing.
(86) International application number: US9701433
(87) International publication number: WO9728044

(56) References cited:
- US-A- 3 013 745
- US-A- 5 150 748
- US-A- 5 251 099
- US-A- 5 464 172

## Description

The present invention relates generally to thermal management systems for use in missiles, and the like, and more particularly, to the use of carbon fiber material as a thermally conductive interface between a missile housing and an electronics package disposed therein, and between the missile housing and the missile launcher, and to the use of carbon fiber material saturated with hydrocarbon solid-liquid phase change material as a heat sink on the launcher.

The assignee of the present invention designs and manufactures missile systems, and the like. Such missile systems includes relatively compact electronic control, guidance and computer systems, and the like, that require heat to be dissipated therefrom. A typical electronics package used in such missile systems is disclosed in U.S. Patent No. 5,251,099, issued October 5, 1993, entitled "High Density Electronics Package Having Stacked Circuit Boards", assigned to the assignee of the present invention. This patent discloses a high-density electronics package that houses a plurality of circular circuit cards along with heat sinks and circuit interconnections in a single enclosure. The electronics package is housed within a missile and is used as a guidance system for the missile. The present invention was developed for use with missiles employing these types of electronics packages.

Various thermal management constraints are imposed by requirements to retrofit existing missile systems. Small volume retrofit constraints are dominated by thermal flux limits in the heat conduction path between the missile and its launch tube, for example, and total energy limits of the available thermal system. The small volume of the thermal system presently available in man-portable, air defense missiles forces conduction, and associated interfaces, to play a major role in the thermal management of the missile system. This problem is exacerbated when missiles are tightly fitted into thermally insulating launch tubes with critically controlled missile to tube friction (fly-out) tolerances.

Long duty cycle "on" time system requirements for the missile create relatively large thermal energy loads. Such high energy levels require significant thermal capacity, or in other words, a large heat sink. In order to minimize the overall weight of man-portable weapon systems, a low mass heat sink is required.

Accordingly, it is an objective of the present invention to disclose a missile system that exhibits improved thermal management capabilities, and, in particular, provides improved heat dissipation from the missile system during launch.

This object is achieved with a missile system comprising a missile launcher, a missile having a missile housing and an electronics package comprising a heat source disposed within the missile housing, in that a first layer of carbon fiber flocking material is provided that comprises a thermally conductive interface disposed between the electronics package and the missile housing.

According to the invention, carbon fiber flocking material is used as a thermally conductive interface between an electronics package (such as those employing fragile three-dimensional multi-chip module (MCM) circuits, for example) and a missile housing, that also provides for mechanical isolation of the electronics package from the missile structure.

Carbon fiber flocking materials may also be employed as an interface between the missile and its launch tube. The carbon fiber material contains carbon fibers that may unidirectionally be oriented to provide for low friction, thus optimizing critically controlled missile tube fly-out friction tolerances, for example.

Flocked carbon fibers have a large surface area, and have a thermally conductive surface that looks and feels like black velvet. Processes for flocking surfaces are relatively inexpensive, and the flocking material may be applied in a continuous process, not unlike methods used in the textile industry.

According to a preferred embodiment of the invention, a thermal capacity for the missile by using hydrocarbon solid-liquid phase change material (PCM) as a saturant within carbon fiber containment structures disposed on the launcher is used. The hydrocarbon solid-liquid phase change material in combination with the carbon fiber material forms a unique composite system that resolves typical problems associated with waxy phase change materials, including microscopically uniform phase distribution as well as heat transfer into an inherently nonconductive medium (the missile launcher).

Thus, in accordance with this preferred embodiment, carbon fiber material and carbon fiber material saturated with hydrocarbon solid-liquid phase change material are used in combination as thermal management structure to provide a thermally conductive interface between a heat source and its housing. The carbon fiber material is used for mechanical isolation of the heat source from its electronics package. Carbon fibers used in the carbon fiber material may be unidirectionally oriented to provide for low friction, thus optimizing critically controlled friction tolerances. Additionally, the carbon fiber material saturated with hydrocarbon solid-liquid phase change material may be used to transfer heat into an inherently nonconductive medium.

Thermal characterization test specimens constructed using the flocked carbon fiber materials and phase change materials, in the small diameter form factor of a typical missile in which they may be employed were produced, instrumented, and tested to prove out the concepts of the present invention.

The various features and advantages of the present invention may be more readily understood with reference to the following detailed description taken in conjunction with the accompanying drawings, wherein like reference numerals designate like structural elements, and in which:
Fig. 1 illustrates a missile system employing thermal management concepts in accordance with the principles of the present invention; and
Fig. 2 illustrates a simulated electronics package, missile and launcher employed to test out the principles of the present invention.

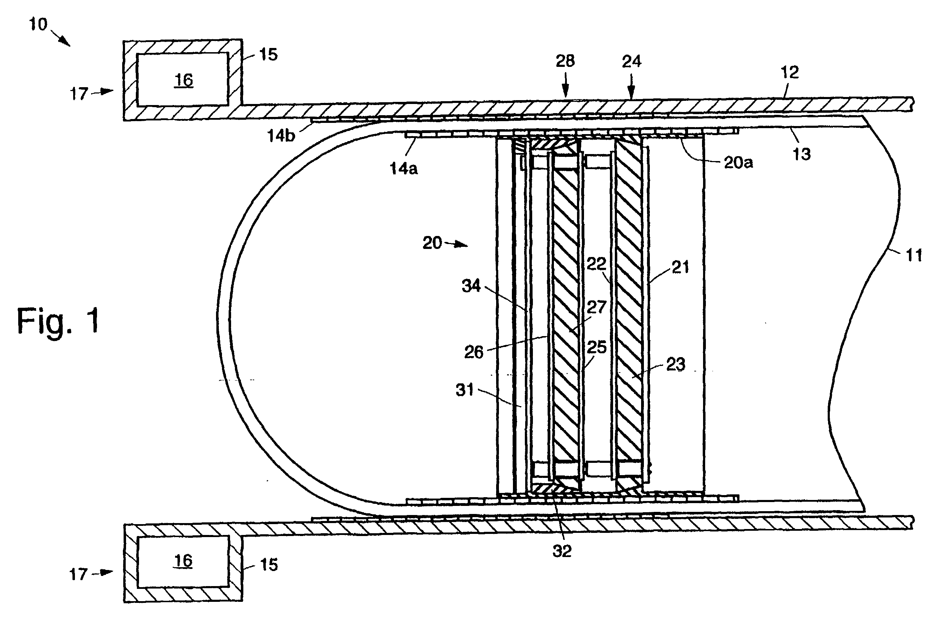

Referring to the drawing figures, Fig. 1 illustrates a portion of a missile system 10 employing thermal management concepts in accordance with the principles of the present invention. The missile system 10 includes a missile launcher 12 (or first member 12) and a missile 11 (or second member 11) that is launched (or slid or ejected) from the missile launcher 12. The missile 11 has an electronics package 20 (that is a heat source 20) disposed within its body 13 or missile housing 13. The electronics package 20 may be a guidance electronics unit (GEU) 20 that was developed by the assignee of the present invention for use in retrofitting small diameter missiles 11 to enhance the acquisition range and guidance capabilities thereof. The design of the electronics package 20 is not critical to understanding the present invention, but will be described in some detail so that Fig. 1 may be better understood.

The electronics package 20 is comprised of a housing 20a into which a plurality of stacked circuit cards 21, 22, 25, 26 are disposed, and which are retained in the housing 20a by means of a conical surface on an internal wall of the housing 20a, and a lock ring 31 and wedge-ring 32. First and second circular circuit cards 21, 22 are bonded to a first heat sink 23 to form a first subassembly 24. A conical angle is formed on the edge of the first subassembly 24 that mates with the conical surface on the housing 20a. Third and fourth circuit cards 25, 26 are bonded to a second heat sink 27 and form a second subassembly 28. The wedge ring 32 has an internal angle that wedges itself between the outer edge of the second subassembly 28 and the internal wall of the housing 20a. An electrical interface board 34 is provided that is electrically connected to each of the circuit cards 21, 22, 25, 26. External connections are made by way of flat electrical cables or wires (not shown). The lock ring 31 and wedge-ring 32 secure the components in the housing 20a. Details of the construction of the electronics package 20 may be obtained from a reading of U.S. Patent No. 5,251,099 cited in the Background section.

With regard to the present invention, it provides for the use of carbon fiber flocking material as a thermally conductive interface between the electronics package 20 and the missile housing 13. In particular, a first layer of flocking material 14a is disposed between an outer surface of the electronics package 20 and an inner wall of the missile housing 13 of the missile 11. In addition, the first layer of carbon fiber flocking material 14a provides mechanical isolation of the electronics package 20 from the missile housing 13.

Additionally, a second layer of carbon fiber flocking material 14b is disposed between an outer wall of the missile housing 13 and an inner wall of the launcher 12. Carbon fibers comprising the second layer of carbon fiber flocking material 14b may be unidirectionally oriented to provide for low friction, thus optimizing critically controlled missile launch tube fly-out friction tolerances. The second layer of carbon fiber flocking material 14b allows the missile 11 to slide out of the launcher 11 in a controlled manner.

The first and second layers of carbon fiber flocking material 14a, 14b may be comprised of carbon fiber flocking material developed by Energy Science Laboratories, Inc., for example. Flocked carbon fibers have a large surface area, and have a thermally conductive surface that looks and feels like black velvet. Processes for flocking surfaces are relatively inexpensive, and the layers of flocking material 14a, 14b may be applied in a continuous process, not unlike methods used in the textile industry.

In addition, a lightweight heat sink 17 can be formed as a part of the launcher 12. The heat sink 17 comprises a cavity 15 formed adjacent one end of the launcher 12 that is filled with carbon fiber material 16 that is saturated with hydrocarbon solid-liquid phase change material. Typical hydrocarbon solid-liquid phase change materials include 2-carbon normal alkane dotriacontane, for example. Such hydrocarbon solid-liquid phase change materials are available from Energy Science Laboratories, Inc., and are well-suited for use in missile applications, and the like. The hydrocarbon solid-liquid phase change material forms a unique composite system that resolves typical problems associated with conventional waxy phase change materials, including microscopically uniform phase distribution as well as heat transfer into an inherently nonconductive medium (the missile launcher 12).

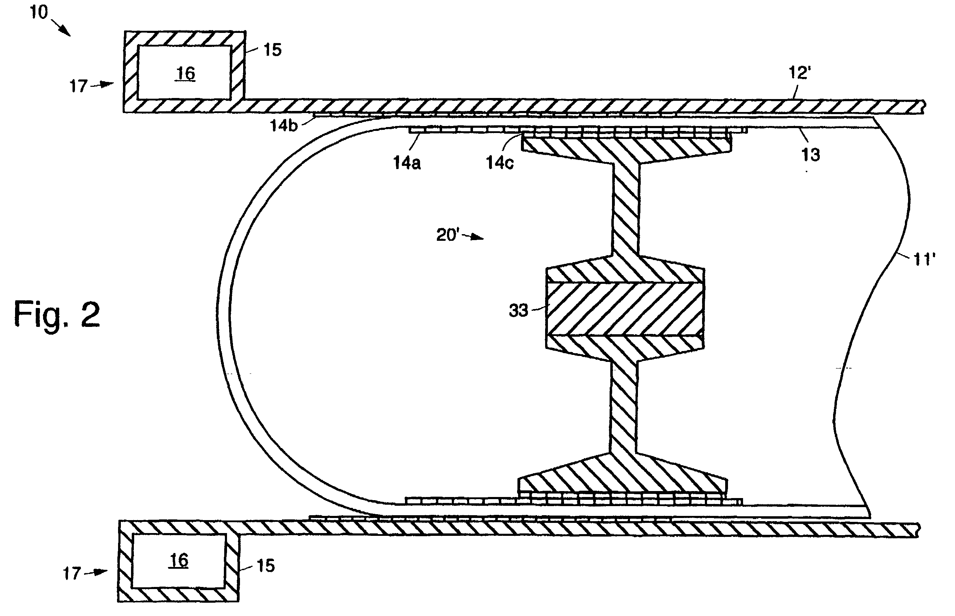

Test apparatus 40 was fabricated to match the sizing and thermal requirements in a typical missile 11. Fig. 2 illustrates the test apparatus 40 which comprises a simulated electronics package 20', missile 11' and launch tube 12' employed to test out the principles of the present invention. The simulated launch tube 12' was machined from 6061 aluminum. Aluminum was used in place of copper and its thickness was increased by 391/167 = 2.341 so that it exhibited the same thermal conduction as a typical copper launcher 12 having its nominal thickness. A recess of 228.6 mm x 0.38 mm (9.0" x 0.015") was cut on the inside of the simulated launch tube 12' into which a 1.02 mm (0.040") thick gasket comprising the second carbon fiber flocking material 14b was bonded using No. 2216 epoxy manufactured by Minnesota Mining and Manufacturing.

The outer housing 13 of the simulated missile 11' was also machined from 6061 aluminum and had a mass of 112 g. A 0.76 mm (0.030") thick gasket comprising the first carbon fiber flocking material 14a was installed on the inside of the outer housing 13 that is used as an interface to the simulated, which was also bonded using No. 2916 epoxy manufactured by Minnesota Mining and Manufacturing.

The shape of the simulated electronics package 20' was chosen in an effort to match the 95 J/K heat capacity of an actual electronics package 20. The mass of the simulated electronics package 20' was 96.9 g and had a heat capacity of 86.8 J/K. A heater 33 was disposed at the center of the simulated electronics package 20' and had a mass of 15.6 g, but its composition was uncertain (the heater 33 was made of stainless steel, ceramic, and other materials). Assuming the heater 33 had about 2/3 the heat capacity of aluminum yields a heat capacity of about 9 J/K, so that the total heat capacity roughly matches the actual value of an actual electronics package 20.

The exterior surface of the simulated electronics package 20' was covered with a 0.51 mm (0.020") thick first layer of carbon fiber flocking material 14a. The area of this layer 14a is 67.18 cm², matching another layer 14c of carbon fiber flocking material 14a disposed on the inner surface of the housing 13 of the simulated missile 11'. A nominal gap between the two adjacent layers of carbon fiber flocking material 14a, 14c was 0.81 mm (0.032") so that interpenetration of the two material layers 14a, 14c by at least 0.30 mm (0.012") occurred. Additional interpenetration of the velvet material is actually achieved because of the effective thickness of the bond line between two material layers 14a, 14c and their respective substrates (the outer surface of the simulated electronics package 20' and the inner surface of the simulated missile 11').

The lightweight heat sink 17 was formed as a cavity 15' that had a cavity volume of 45.81 cm³. The cavity 15' was filled with carbon fiber material 16 having a density of 0.100 g/cm³, which is available from Energy Science Laboratories, Inc., for example, which corresponds to approximately 5% fiber packing fraction. The cavity 15' was additionally filled with hydrocarbon solid-liquid phase change material. The carbon fiber material 16 is effective at increasing the thermal conductivity of the hydrocarbon solid-liquid phase change material to approximately 1 W m⁻¹ K⁻¹ and it serves as a wick to control the location of molten phase-change material. The phase-change material that was used was a 32-carbon normal alkane dotriacontane (C₃₂H₆₆), 99% pure. The melting range of the phase-change material was 68-70°C, and it had a latent heat of about 257 kJ/kg. The phase-change material had a total mass of 30.0 g and was loaded into the cavity 15 to provide a total of 7.70 kJ latent heat capacity. The heat capacity of the metal parts of the test article was approximately 0.40 kJ/K.

Long duty cycle "on" time system requirements of the electronics unit 20 create a thermal energy load for the electronics unit 20 of about 90 kJ. This energy level requires significant thermal capacity for the launcher 11, or in other words, a large heat sink 17. In order to minimize the overall weight of man-portable weapon systems, a low mass heat sink 17 is required. The solid-liquid phase change material offers heat of fusion thermal capacity without a severe weight penalty. Currently available hydrocarbon (wax) phase change materials are chemically stable, and can be easily formulated to match system melting point temperature requirements. Efficient transfer of heat directly into the low conductivity phase change material is achieved by using the flocked carbon fiber material 16. Strong capillary forces hold the phase change material in the carbon fabric of the carbon fiber material 16. The heat distribution within the phase change material is extremely uniform, thus preventing large mechanical stresses that develop when non-uniform solidification occurs in bulk, such as would occur in traditional containers made using phase change materials.

Test results derived from using the test apparatus 40 proved out the principles of the present invention. The test results showed that the carbon fiber materials and saturated carbon fiber material 16 may be used as thermal management materials for providing a thermally conductive interface between an electronics package 20 and a missile housing 13, mechanical isolation of the electronics package 20 from the missile 11, and the carbon fibers may be unidirectionally oriented to provide for low friction, thus optimizing critically controlled missile tube fly-out friction tolerances, for example. Additionally it was determined that carbon fiber material 16 saturated with hydrocarbon solid-liquid phase change material may be used to transfer heat from a missile 11 to a missile launcher 12.

Thus, thermal management structures employing carbon fiber materials for use in missile systems, and the like, has been disclosed. It is to be understood that the described embodiments are merely illustrative of some of the many specific embodiments which represent applications of the principles of the present invention. Clearly, numerous and other arrangements can be readily devised by those skilled in the art without departing from the scope of the invention, as defined by the claims.

## Claims

1. A missile system comprising
a missile launcher (12);
a missile (11) having a missile housing (13); and
an electronics package (20) comprising a heat source disposed within the missile housing (13); **characterized by**
a first layer of carbon fiber flocking material (14a) that comprises a thermally conductive interface disposed between the electronics package (20) and the missile housing (13).

2. The missile system of claim 1, **characterized in that** the first layer of carbon fiber flocking material (14a) provides mechanical isolation of the electronics package (20) from the missile housing (13).

3. The missile system of claim 1 or 2, **characterized by** a second layer of carbon fiber flocking material (14b) disposed between an outer wall of the missile housing (13) and an inner wall of the missile launcher (12).

4. The missile system of claim 3, **characterized in that** the carbon fibers comprising the second layer of carbon fiber flocking material (14b) are unidirectionally oriented to provide for low friction to optimize fly-out friction tolerances of the missile launcher (12).

5. The missile system of any of claims 1 to 4, **characterized by**
a heat sink (17) that comprises a cavity (15) formed adjacent an end of the launcher (12) that is filled with carbon fiber material (16) that is saturated with hydrocarbon solid-liquid phase change material.

6. The missile system of claim 5, **characterized in that** the hydrocarbon solid-liquid phase change material comprises 32-carbon normal alkane dotriacontane.

## Patentansprüche

1. Raketensystem mit
einer Raketenstarteinrichtung (12);
einer Rakete (11), die ein Raketengehäuse (13) aufweist, sowie ein Elektronikpaket (20), das eine in dem Raketengehäuse (13) aufgenommene Wärmequelle besitzt, **gekennzeichnet durch**
eine erste Schicht aus Kohlefaser-Flockmaterial (14a), die eine thermisch leitfähige Grenzfläche zwischen dem Elektronikpaket (20) und dem Raketengehäuse (13) aufweist.

2. Raketensystem nach Anspruch 1, **dadurch gekennzeichnet, daß** die erste Schicht aus Kohlefaser-Flockmaterial (14a) eine mechanische Isolierung des Elektronikpaketes (20) gegenüber dem Raketengehäuse (13) bereitstellt.

3. Raketensystem nach Anspruch 1 oder 2, **gekennzeichnet durch** eine zweite Schicht aus Kohlefaser-Flockmaterial (14b), die zwischen einer Außenwand des Raketengehäuses (13) und einer Innenwand der Raketenabschußeinrichtung (12) angeordnet ist.

4. Raketensystem nach Anspruch 3, **dadurch gekennzeichnet, daß** die Kohlenstoff-Fasern, die die zweite Schicht aus Kohlefaser-Flockmaterial (14b) umfassen, unidirektional ausgerichtet sind, um eine niedrige Reibung zu erzeugen, um die Ausflug-Reibungstoleranzen der Raketenabschußeinrichtung (12) zu optimieren.

5. Raketensystem nach irgendeinem der Ansprüche 1 bis 4, **gekennzeichnet durch**
eine Wärmesenke (17), die einen Hohlraum (15) angrenzend an ein Ende der Abschußeinrichtung (12) aufweist, die mit Kohlefasermaterial (16) gefüllt ist, das mit einem Kohlenwasserstoffmaterial mit Flüssig/Fest-Phasenwechsel gesättigt ist.

6. Raketensystem nach Anspruch 5, **dadurch gekennzeichnet, daß** das Kohlenwasserstoffmaterial mit Fest/Flüssig-Phasenwechsel 32-carbon-normal-alkan-dotriakontan umfasst.

## Revendications

1. Système de missile comportant
un lanceur (12) de missile ;
un missile (11) ayant une enveloppe de missile (13) ; et
un boîtier électronique (20) comportant une source de chaleur disposée à l'intérieur de l'enveloppe (13) du missile ; **caractérisé par**
une première couche de matière de flocage (14a) à fibres de carbone qui comprend une interface conductrice de la chaleur disposée entre le boîtier électronique (20) et l'enveloppe (13) du missile.

2. Système de missile selon la revendication 1, **caractérisée en ce que** la première couche de matière de flocage (14a) à fibres de carbone réalise une isolation mécanique du boîtier électronique (20) par rapport à l'enveloppe (13) du missile.

3. Système de missile selon la revendication 1 ou 2, **caractérisé par** une seconde couche de matière de flocage (14b) à fibres de carbone disposée entre une paroi extérieure de l'enveloppe (13) du missile et la paroi intérieure du lanceur (12) de missile.

4. Système de missile selon la revendication 3, **caractérisé en ce que** les fibres de carbone constituant la seconde couche de la matière de flocage (14b) à fibres de carbone sont orientées de façon unidirectionnelle afin d'établir un faible frottement pour optimiser les tolérances de frottement de sortie du lanceur (12) de missile.

5. Système de missile selon l'une quelconque des revendications 1 à 4, **caractérisé par**
un dissipateur (17) de chaleur qui présente une cavité (15) formée à proximité immédiate d'une extrémité du lanceur (12), qui est remplie de matière (16) à fibres de carbone saturée d'une matière hydrocarbonée à changement de phase solide-liquide.

6. Système de missile selon la revendication 5, **caractérisé en ce que** la matière hydrocarbonée à changement de phase solide-liquide comprend un alcane dotriacontane normal à 32 atomes de carbone.
